# EUROPEAN PATENT APPLICATION

(11) **EP 4 769 978 A1**
(43) Date of publication of application: **01.07.2026**
(21) Application number: 24223236.1
(22) Date of filing: 24.12.2024
(51) Int. Cl.: H04B 10/70, G06N 10/00

(54) **SINGLE-DETECTOR BELL-STATE MEASUREMENT DEVICE**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: Nederlandsch Octrooibureau

(57) **Abstract**

A Bell state measurement device comprising first and second optical input fiber to respectively pass first and second photon comprising a first component and a second component, and a third component and a fourth component, an optical beam splitter configured to receive first and second photon respectively from first and second optical input fiber and to combine first and second photon into third and fourth photon; first and second optical output fiber to receive third and fourth photon, the second optical output fiber comprises a delay line; and a single-photon detector configured to receive third and fourth photon from first optical output fiber, or delayed third photon and delayed fourth photon from second optical output fiber, or third photon from first optical output fiber and delayed fourth photon from second optical output fiber, or fourth photon from first optical output fiber and delayed third photon from second optical output fiber.

## Description

### FIELD OF THE INVENTION

The invention relates to a single detector for bell state measurement, and corresponding method.

### BACKGROUND OF THE INVENTION

In quantum communication, quantum states, typically qubit states, should be transmitted over long distances. Components in such systems include entangled photon-pair sources (EPPS), quantum memories, Bell-state measurements (BSM), and local-operations- and-classical-communication (LOCC). Together, these components enable quantum teleportation, which means that quantum states can be transmitted over two or more quantum links in cascade.

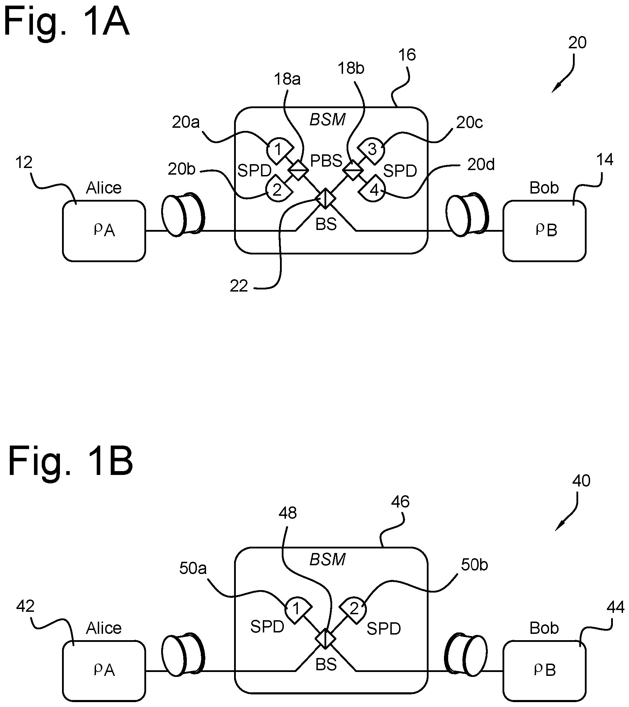

"Efficient Bell state analyzer for time-bin qubits with fast-recovery WSi superconducting single photon detectors", by R. Valivarthi et al, Optics Express Vol. 22, Issue 20, pp. 24497-24506 (2014), presents the two most used approaches for qubit encoding in photons, and their associated BSM. One of the two approaches for encoding is polarisation qubits and is schematically shown in Fig. 1A. The other of the two approaches for encoding is time-bin qubits and is schematically shown in Fig. 1B.

The system 20 of Fig. 1A comprises a first transmitter 12 and a second transmitter 14, each arranged to emit photons, and a BSM device 16 arranged to measure the Bell state of the photons emitted by the transmitters 12 and 14. The BSM device 16 of Fig. 1A comprises the following optical components: a regular beam splitter (BS) 22, two polarisation beam splitters (PBS) 18a and 18b and four single-photon detectors (SPD) 20a, 20b, 20c, and 20d.

The system 40 of Fig. 1B comprises a first transmitter 42 and a second transmitter 44, each arranged to emit photons, and a BSM device 46 arranged to measure the Bell state of the photons emitted by the transmitters 42 and 44. The BSM device 46 of Fig. 1B comprises the following optical components: a regular beam splitter (BS) 48 and two single-photon detectors (SPD) 50a and 50b.

In both systems shown in Figs. 1A and 1B, there is a dead-time during which the SDPs cannot detect a subsequent photon.

For some single-photon detectors (for instance, tungsten silicide (WSi) nanowire meanders), this dead time can be reduced to 10 nanoseconds (ns), which corresponds to the time needed by light to travel 30 centimetres in vacuum. This allows for more compact transmitters but can only be used with time-bin encoding with precise phase-stabilized unbalanced Mach-Zehnder interferometers (UMZI), which includes a delay line in that size range.

Before the availability of these low-dead-time single-photon detectors, an alternative was to use, instead of a detector, a fast optical switch and two slower detectors, one for the slow part of the photonic qubit, and one for the fast part. However, this doubles the number of detectors needed from two to four, and it introduces two expensive, bulky and lossy optical switches.

There are also security risks associated with time, frequency and polarisation mismatches between SDPs as described in "Information security - Security requirements, test and evaluation methods for quantum key distribution Part 1: Requirements", ISO/IEC 23837-1, 2023, as this makes possible for the threat agents to totally or partially control the click of the single-photon detector by controlling the parameters of the input quantum state.

### SUMMARY OF THE INVENTION

According to a first aspect of the invention, it is provided a Bell state measurement device for performing a joint Bell state measurement and comprising a first optical input fiber and a second optical input fiber configured to respectively pass a first photon and a second photon respectively associated with a first transmitter and a second transmitter, the first photon comprising a first component and a second component and the second photon comprising a third component and a fourth component, an optical beam splitter configured to receive the first photon and the second photon respectively from the first optical input fiber and the second optical input fiber and to combine the first photon and the second photon into a third photon and a fourth photon; a first optical output fiber and a second optical output fiber configured to receive from the optical beam splitter the third and photon and the fourth photon, wherein the second optical output fiber comprises a delay line; and a single-photon detector configured to receive the third photon and the fourth photon from the first optical output fiber, or the delayed third photon and the delayed fourth photon from the second optical output fiber, or the third photon from the first optical output fiber and the delayed fourth photon from the second optical output fiber, or the fourth photon from the first optical output fiber and the delayed third photon from the second optical output fiber.

This allows using a low-dead-time single-photon detector very efficiently in terms of rate, energy, weight and/or space, by using a single low-dead-time single-photon detector for the BSM, and a delay line(s) to time-multiplex the to-be-detected single photons onto the detector. This is the case because a second SPD detector, as well as its associated electronics, is not needed. This allows to save money, energy, space and weight. These aspects are especially important in satellite-based systems. The benefit is especially relevant when systems are used in parallel, and a cryostat and detector chip contains a large SPD array. In this case, the system capacity is doubled, or looking at it in another way, the system allows same capacity with half the number of SPDs. An additional technical benefit is the simpler electronic processing, as only a single input is processed per BSM, which again may save time, space and energy. The system also increases security, as BSM is performed using a single photon detector, removing security risks associated with mismatches between DSPs.

The single-photon detector may be a multiplexed single-photon detector.

The multiplexed single photon detector may comprise an array of detectors and a lens system configured to distribute input light on the array of detectors.

The first optical output fiber and the second optical output fiber may be fused at their ends towards the single-photon detector.

The Bell state measurement device may further comprise a short piece of multi-mode fiber configured to guide the first optical output fiber and the second optical output fiber to the single-photon detector.

The first optical input fiber and the second optical input fiber may be connected to the optical beam splitter; and the first optical output fiber and the second optical output fiber may be connected between the optical beam splitter and the single-photon detector.

The first photon and the second photon may be time bin encoded qubits.

The first photon and the second photon may be frequency encoded qubits.

The first photon and the second photon may be polarisation encoded qubits.

The optical beam splitter may comprise a 50/50 optical-fiber coupler.

According to another aspect of the invention, it is provided a system for Bell-state measurement of photons comprising the Bell-state measurement device previously described, a first transmitter configured to generate the first photon; and a second transmitter configured to generate the second photon.

According to another aspect of the invention, it is provided a method of detecting a Bell state using the Bell state measurement device previously described.

### BRIEF DESCRIPTION OF THE DRAWINGS

The invention will be described further with respect to embodiments shown in the drawings.
FIGs. 1A and 1B show schematically a system for performing BSM according to the prior art.
FIG. 2 shows schematically a system for performing BSM according to an embodiment of the disclosure.
FIG. 3 shows schematically detected signals according to the system of Fig. 2.
FIGs. 4A, 4B, 5 and 6 show tables of detected signals according to embodiments of the disclosure.

### DESCRIPTION

The following is a description of certain embodiments of the invention, given by way of example only and with reference to the figures. It is also to be understood that the terminology used herein is for the purpose of describing particular aspects only and is not intended to be limiting.

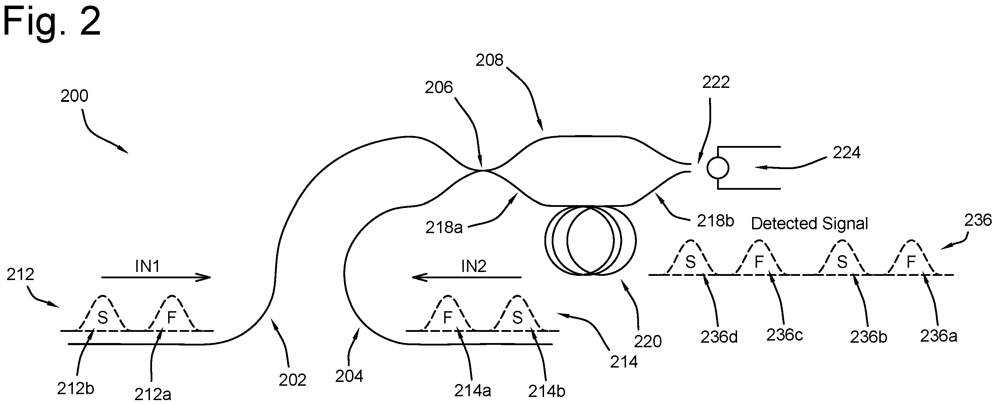

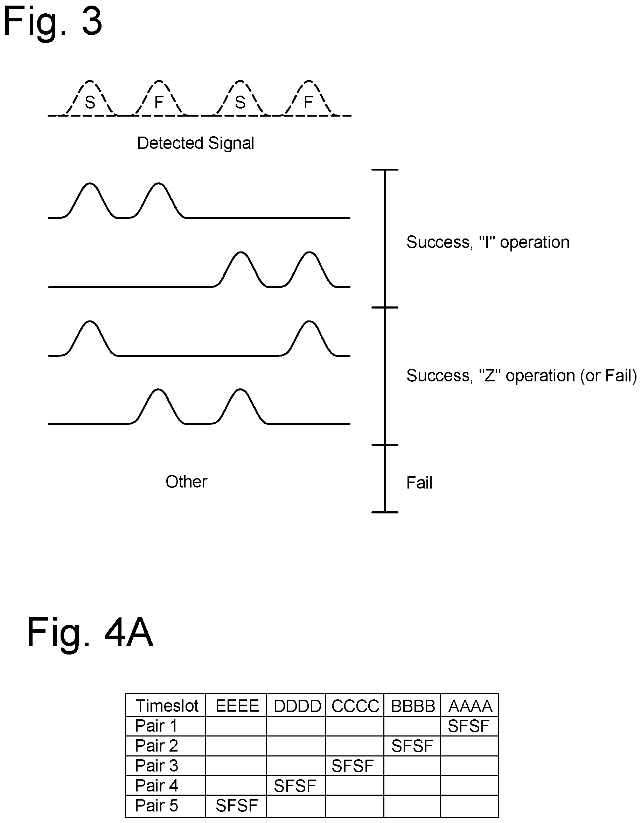

FIG. 2 shows schematically a system for performing BSM according to an embodiment of the disclosure. FIG. 3 shows schematically detected signals according to the system of Fig. 2.

FIGs. 4A, 4B, 5 and 6 show tables of detected signals according to embodiments of the disclosure.

Figure 2 shows a BSM 200 for performing a joint Bell state measurement comprising a single detector for time-bin encoded photonic qubits.

The BSM 200 of Fig. 2 comprises a first optical input fiber 202, a second optical input fiber 204, an optical beam splitter 206, a first optical output fiber 208, a second optical output fiber 218 and a single single-photon detector 224, wherein the second optical output fiber 218 comprises a delay line 220. The first optical input fiber 202 and the second optical input fiber 204 are connected to the optical beam splitter 206, and the first optical output fiber 208 and the second optical output fiber 218 are connected between the optical beam splitter 206 and the single single-photon detector 224.

The first photon 202 and the second photon 204 shown in Fig. 2 are time bin encoded qubits. However, the first and the second photons may be frequency encoded qubits, polarisation encoded qubits or any other of suitable encoded qubit or qudit.

The optical beam splitter 206 of Fig. 2 is a 50/50 optical-fiber coupler. However, any other suitable kind of optical beam splitter may be used.

In Fig. 2, the first optical input fiber 202 is configured to pass a first photon 212 associated with a first transmitter, the second optical input fiber 204 is configured to pass a second photon 214 associated with a second transmitter, the first photon 212 comprises a first component 212a and a second component, and the second photon 214 comprises a third component 214a and a fourth component 214b.

The optical beam splitter 206 of Fig. 2 is configured to receive the first photon 212 from the first optical input fiber 202, to receive the second photon 214 from the second optical input fiber 204 and to combine the first photon 212 and the second photon 214 into a third photon and a fourth photon.

In Fig. 2, the first optical output fiber 208 and the second optical output fiber 218 are configured to receive from the optical beam splitter the third and the fourth photons and the single-photon detector 224 is configured to receive the third photon and the fourth photon from the first optical output fiber, or the delayed third photon and the delayed fourth photon from the second optical output fiber, or the third photon from the fist optical output fiber and the delayed fourth photon from the second optical output fiber, or the fourth photon from the first optical output fiber and the delayed third photon from the second optical output fiber...

The first photon 212 and the second photon 214 of Fig. 2 are two time-bin encoded single photons, each with a "fast" (F) and a "slow" (S) component (a.k.a. "early" and "late") as first and second/third and fourth components. The first photon 212 and the second photon 214 of Fig. 2 are "indistinguishable". That is, the first photon 212 and the second photon 214 have the same polarisation and time profile, and they are well synchronised, such that the F of one photon matches with the F of the other photon, and ditto for S.

The first photon 212 and the second photon 214 are mixed in the 50/50 optical fiber coupler 206 and one output 208 is sent directly to the single-photon detector 224 while the other output 218 is passed through the delay line 220, and then to the single-photon detector 224. These two "modes" are subsequently spatially combined (projected) onto the sensing area of the single-photon detector 224. The output 226 of the single-photon detector 224 is amplified and processed by further electronics (not drawn). The delay of the delay line 220 is chosen such that all F or S photons can be measured individually, sufficiently separated in time to avoid the dead time of the single-photon detector 224. The delay line 220 does not cause any phase sensitivities. In this way, the delay line 220 does not require active phase stabilization.

Figure 3 show an embodiment of the logic processing used in the BSM 200 of Fig. 2.

As shown in Fig. 3, if the single-photon detector 224 measures an F and an S in the first time slot ("--SF"), or an F and an S in the second time slot ("SF--"), then the BSM 200 registers a success. If one of the photon sources was an entangled photon-pair source (or both), then this corresponds to a successful quantum teleportation, and no further action is needed ("I" operation, i.e. the identity matrix, i.e. no action). This result may be communicated via LOCC.

If the single-photon detector 224 measures an F in the first time slot and an S in the second time slot ("-FS-"), or vice verse ("S--F"), then the BSM 200 also registers a success. In this case, if one photon source was an entangled photon-pair source (EPPS), then a successful quantum teleportation requires a "Z" operation on the other photon from that EPPS source. This result may be communicated via LOCC. If a Z operation is not available, then the BSM 200 could also be processed as a failure.

If the single-photon detector 224 measures any other outcome (e.g. a fast pair "-F-F", fewer than two photons detected like "-S-", etc.), then the BSM 200 registers a failure. Again, this result may be communicated via LOCC.

In the figures 2-6, the fast "F" at the front side of the pulse, and the slow "S" at the back side of the pulse, represent a "snapshot" in time such that a detector would detect F earlier and S later.

The single-photon detector 224 may be a multiplexed single photon detector. The multiplexed single photon detector may comprise an array of detectors and a lens system configured to distribute input light on the array of detectors. Also, passive beam splitters and/or any other passive or active optics may be used in the multiplexed single photon detector to distribute the input light on the array of detectors. In this way, the individual single-photon detectors forming the array may have a higher dead time but, as different photons reach different detectors, the effective dead time of the multiplexed single photon detector system is lower than that of the individual detectors forming the array. By providing light distribution as uniform as possible, all detectors have similar chances of detecting an incoming photon.

The BSM 200 of Fig. 2 may keep track of failures of the type "S-S-" and "-F-F". If the two photons of a detected photon pair are identical, then those cases would not happen due to Hong-Ou-Mandel interference and the detection rate of those failures may be used as a measure of the fidelity of the photon pairs. This information on failures may also be used in a feedback loop in the system, e.g. for tuning of synchronisation, polarisation or other photon parameters.

The surface area of the single-photon detector 224 of Fig. 2 may be minimized to maximize performance of the single-photon detector 224, which includes more efficiently using bandwidth and energy. The first (208) and second (218) optical output fibers of Fig. 2 may be fused at their ends (222) towards the single-photon detector (224) to minimize their optical fields and thereby minimize the required detector area of the single-photon detector 224. A small detector area may improve the bandwidth of the detector.

In an embodiment, lenses may be used to focus the light from the two fibers on the same minimized detector area of the single-photon detector 224 of Fig. 2.

In another embodiment, a short piece of multi-mode fiber may be used to guide the outputs of the two fibers to the single-photon detector 224 of Fig. 2. This piece of multimode fiber should be short to keep any multi-mode dispersion to a minimum. It may be fusing spliced to the two fibers. The diameter of the sensitive area of a single-photon detector is typically 10x the diameter of a fundamental model of an optical fiber, or of the focal area of a lens. This implies that the spatial combiner 222 can operate with near zero optical losses.

All of the optical components, such as the beam splitter 206 and the delay line 220, in the BSM 200 of Fig. 2 may be free-space components. Furthermore, some or all of the optical components may be part of an integrated optical circuit. The single-photon detector 224 of Fig. 2 may be integrated with the optical components in such integrated optical circuit. In this way, different optimizations in space and weight can be achieved.

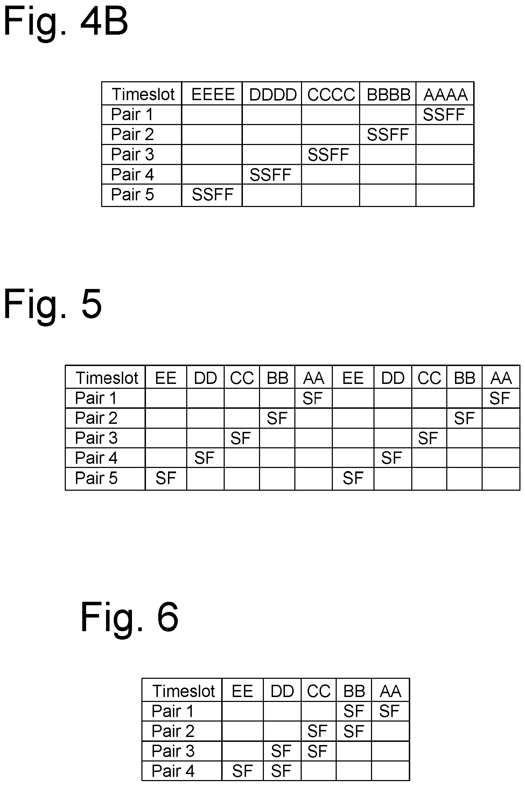

The qubit modes may be multiplexed in a different order as shown in Figs. 4A and 4B, e.g. SSFF instead of SFSF. In this way, a larger time spacing between two detected photons for the "success-I-operations" is provided such that higher detection throughput can be achieved for the same low-dead-time single-photon detector 224.

In an embodiment, multiple photon pairs may be processed consecutively, e.g. FSFS₁-FSFS₂-FSFS₃. In a further embodiment multiple photon pairs are processed in other order, including intermingling between consecutive photon pairs, as shown in Fig. 5. This may be practical for some implementation, or for some interactions with the physical medium, when photons are sent out in bursts.

In an embodiment, photon pairs are received partially overlapping in time. This embodiment makes use of the fact that most photons are lost before they arrive at the BSM 200 due to optical losses in optical fiber and/or free-space transmission. Therefore, it is highly unlikely that a detected photon is immediately preceded or succeeded by another detected photon. In this way, the throughput of the system (rate of successful BSM measurement) is the same as in a two-detector system. Note that this embodiment suffers from "false heralding". For example, if photons are detected in timeslots BB and CC, as shown in Figure 6, then this would be heralded as a successful BSM measurement for photon pair #2. However, one or both of those photons could have originated from photon pair #1 or #3. This limitation would need to be taken into account in postprocessing.

In an embodiment, a passive and/or active optical circuit is placed before the 50-50 coupler 206.

In an embodiment, the system uses photonic qudits instead of qubits. An example is a time-bin-encoded qutrit, which has three parts instead of the two (F, S) for qubits.

As said, the invention may be applied to polarisation qubits, again time-multiplexing two or more of the detectors, and hence reducing the number of detectors, for example from four to two, or from four to one.

The invention may also be applied to otherwise-encoded photonic qubits, including polarisation, time-bin, wavelength/frequency, subcarrier, and other, as well as possible combinations thereof.

In an embodiment, spectral and/or spatial multiplexing is to perform multiple BSM in parallel in a single node. The technical benefit is that the same cryostat and detector chip can house multiple SPD detectors in parallel, lowering the marginal cost of additional SPDs.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A Bell state measurement device (200) for performing a joint Bell state measurement comprising:
a first optical input fiber (202) and a second optical input fiber (204) configured to respectively pass a first photon (212) and a second photon (214) respectively associated with a first transmitter and a second transmitter, the first photon (212) comprising a first component (212a) and a second component (212b) and the second photon (214) comprising a third component (214a) and a fourth component (214b);
an optical beam splitter (206) configured to receive the first photon (212) and the second photon (214) respectively from the first optical input fiber (202) and the second optical input fiber (204) and to combine the first photon (212) and the second photon (214) into a third photon and a fourth photon;
a first optical output fiber (208) and a second optical output fiber (218) configured to receive from the optical beam splitter (206) the third photon and the fourth photon, wherein the second optical output fiber (218) comprises a delay line (220); and
a single-photon detector (224) configured to receive the third photon and the fourth photon from the first optical output fiber, or the delayed third photon and the delayed fourth photon from the second optical output fiber, or the third photon from the fist optical output fiber and the delayed fourth photon from the second optical output fiber, or the fourth photon from the first optical output fiber and the delayed third photon from the second optical output fiber..

2. The Bell state measurement device (200) according to claim 1, wherein the single-photon detector is a multiplexed single-photon detector.

3. The Bell state measurement device (200) according to claim 2, wherein the multiplexed single photon detector comprises an array of detectors and a lens system configured to distribute input light on the array of detectors.

4. The Bell state measurement device (200) according to any of the previous claims, wherein the first optical output fiber (208) and the second (218) optical output fiber are fused at their ends (222) towards the single-photon detector (224).

5. The Bell state measurement device (200) according to any of the previous claims, further comprising a short piece of multi-mode fiber configured to guide the first optical output fiber and the second optical output fiber to the single-photon detector (224).

6. The Bell state measurement device (200) according to any of the previous claims, wherein the first optical input fiber (202) and the second optical input fiber (204) are connected to the optical beam splitter (206); and the first optical output fiber (208) and the second optical output fiber (218) are connected between the optical beam splitter (206) and the single-photon detector (224).

7. The Bell state measurement device (200) according to any of the previous claims, wherein the first photon and the second photon are time bin encoded qubits.

8. The Bell state measurement device (200) according to any of the previous claims, wherein the first photon and the second photon are frequency encoded qubits.

9. The Bell state measurement device (200) according to any of the previous claims, wherein the first photon and the second photon are polarisation encoded qubits.

10. The Bell state measurement device (200) according to any of the previous claims, wherein the optical beam splitter (206) comprises a 50/50 optical-fiber coupler.

11. A system for Bell-state measurement of photons comprising:
• the Bell-state measurement device according to any of the previous claims;
• a first transmitter configured to generate the first photon; and
• a second transmitter configured to generate the second photon.

12. A method of detecting a Bell state using the Bell state measurement device (200) according to any of the previous claims.
